# EUROPÄISCHE PATENTSCHRIFT

(11) **EP 1 843 049 B1**
(45) Veröffentlichungstag und Bekanntmachung des Hinweises auf die Patenterteilung: **26.11.2008**
(21) Anmeldenummer: 06007230.3
(22) Anmeldetag: 05.04.2006
(51) Int. Cl.: F16B 7/04, F16B 7/18

(54) **Verbindung zur gesicherten Steckverbindung zweier ungleich dicker Streben**
Connection for plug-in coupling of two unequally thick rods
Liaison de barres de differents diamètres

(43) Veröffentlichungstag der Anmeldung: 10.10.2007
(73) Patentinhaber: Freyermuth, Joachim, 24361 Haby (DE)
(72) Erfinder: Freyermuth, Joachim, 24361 Haby (DE); Brügmann, Peter, 24161 Altenholz (DE)
(74) Vertreter: Biehl, Christian

(56) Entgegenhaltungen:
- EP-A- 0 943 521
- US-A- 5 078 534

## Beschreibung

Die Erfindung betrifft eine Verbindung zur gesicherten Steckverbindung zweier ungleich dicker Streben, insbesondere zweier ungleich dicker Rohre.

Beim Zusammenbau von Rohrgestellen, beispielsweise für einfache Traggestelle zum Transport von Boote, aber auch für viele andere aus Rohrrahmen bestehende Gestelle, besteht das Bedürfnis, Rohre im wesentlichen quer zueinander steck-zu-verbinden, wobei die Steckverbindung sicher gegen ein Auseinanderfallen der Rohre sein soll, vorteilhafterweise zudem aber auch in unterschiedlichen Einschubpositionen sicherbar sein soll.

Als Stand der Technik ist die US 5,078,534 zu nennen, in der bereits bei Gerüsten dünnere Rohrstücke zur Verbindung zweier axial aneinander zu setzende dickere Rohrstücke vorgesehen werden. Die dünneren Rohrstücke weisen dabei für Bolzen Durchlassbohrungen auf, wobei die Bolzenmuttern ovalen Außenumfang haben und in oval erweiterte Bohrungen in den Innenrohren einpassen. Eine solche mit bündig übereinander angeordneten Bohrungen durch zwei Rohre versehene Befestigung ist bis auf die besondere Art der Muttern üblich, weist jedoch den Nachteil auf, dass beide Rohre durch die entsprechenden Bohrungen für die Bolzen an gleicher Stelle geschwächt sind. Eine Zusammenfügung unterschiedlich dicker Rohre anders als durch Einschieben des dünnen Rohres in den Innenraum des dicken Rohres ist auf diese Weise nicht möglich. Insbesondere ist keine Querverbindung möglich, bei der zusätzlich noch das dünne Rohr klemmgesichert werden kann.

Die EP 0 943 521 A1 betrifft die Verbindung von Leichtbauprofilen, wobei die Leichtbauprofile mit Querschnittsbohrungen versehen sind, die in genau rechtem Winkel das Durchschieben dünnerer Querprofile in mehrere Längsprofile ermöglicht. Zusätzliche Formkörper, die den jeweiligen Abstand der Seiten zum zweiten Profil überbrücken, ermöglichen die Bolzenverspannung der Leichtbauprofile miteinander. Diese Art der Verspannung ermöglicht nur das rechtwinklige Verbolzen und benötigt zusätzliche Formteile.

Erfindungsgemäß wird dies durch eine Verbindung mit den Merkmalen des Hauptanspruches gelöst. Die Unteransprüche geben vorteilhafte Ausführungsformen wieder.

Insbesondere ist vorteilhaft, eine Verbindung zu schaffen, bei der eine erste mit einer gewünschten Lage der schmaleren Strebe angeordneten ersten Aufnahme versehene dickere Strebe mit einer quer dazu angeordneten zweiten Aufnahme für ein stiftartiges Querelement versehen ist, wobei die schmalere Strebe mit wenigstens einer Kerbe versehen ist, in die das in der zweiten Aufnahme in der dickeren Strebe ruhende Querelement einpasst.

Dabei können die Streben als Rohre ausgebildet sein und das Querelement ein Stift, ein Bolzen oder eine Schraube sein.

Durch eine sich im wesentlichen in Richtung der Erstreckung der dickeren Strebe erstreckenden Schlitz, quer durch die dickere Strebe, der sich in die erste Aufnahme öffnet, kann eine Kompressionsentlastung geschaffen werden, die es nach einem Zusammenstecken erlaubt, die dickere Strebe mit einem Bolzen oder der Schraube durch Spannen dieser soweit verformen, dass die dünnere Strebe auch wackelsicher festgeklemmt wird. Gleichzeitig wird ein gesicherter Sitz (nicht nur ein Klemmsitz) der dünneren Strebe für den Fall, dass die erste Aufnahme eine Durchlassbohrung ist, dadurch erreicht, dass eine die dickere Strebe spannende Schraube ein wenig in den lichten Raum der Aufnahme hineinragt, und gleichzeitig Fräskerben in dem dünneren Lenkteil vorgesehen sind, die zur Aufnahme des Querelementes vorgesehen sind, wenn dieses nach Zusammenstecken der Streben in seine zweite Aufnahme eingebracht wird.

Vorteilhafterweise wird bei einem Rohr eine Querbohrung dicht nahe der ersten Durchlassbohrung im rechten Winkel dazu angeordnet, und zwei Entlastungsschlitze am Rand der ersten Durchlassbohrung so vorgesehen, dass sie in Richtung der Lage des Querelementes zeigen, so dass für das Spannen des Querelementes ein Nachgeben des ersten Rohres erleichtert wird.

Durch mehrere parallel angeordnete Kerben kann das dünnere Rohr in verschiedenen Positionen im dickeren Rohr fest an dieses angesetzt werden.

Selbstverständlich muss die erste Aufnahme, in die das dünnere Rohr im zweiten Rohr ruht, nicht rechtwinklig im zweiten Rohr vorgesehen sein, sondern kann auch eine andere gewünschte geometrische Lage annehmen. Genauso können auch andere Längsstreben außer Rohren verwandt werden, beispielsweise Ovalprofile oder Rechteckprofile. Bei diesen ist jedoch stets darauf zu achten, dass die verbleibende Stegbreite im dickeren Profil nach Vorsehung der ersten Aufnahme den Stabilitätsanforderungen genügt.

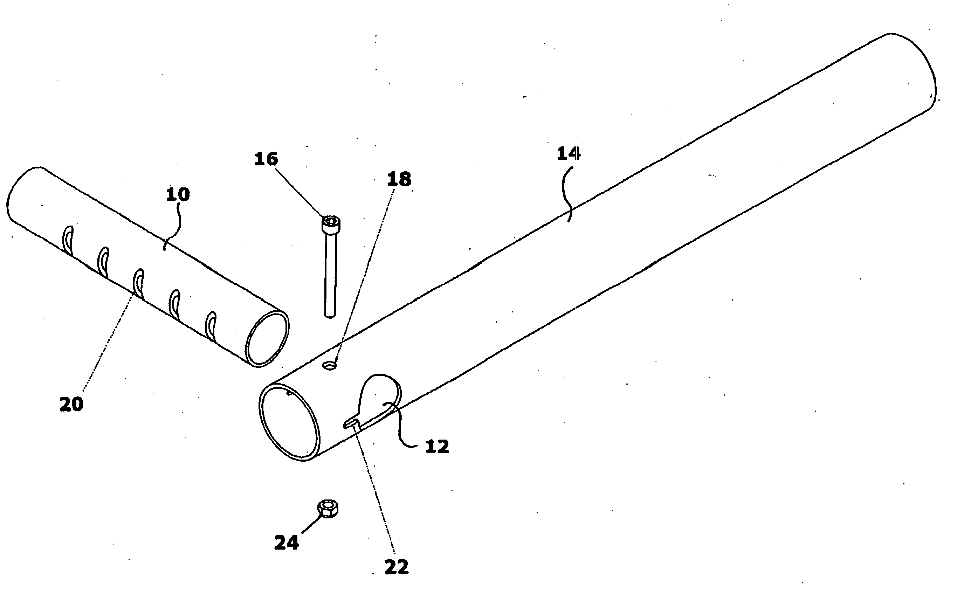

Weitere Vorteile und Merkmale der Erfindung ergeben sich aus nachfolgender Beschreibung eines bevorzugten Ausführungsbeispiels anhand der beigefügten Zeichnung. Dabei zeigt:
- die einzige Figur: eine schematische Explosionsdarstellung zweier miteinander zu verbindenden Rohre in einem bevorzugten Ausführungsbeispiel der Erfindung, wobei das Querelement eine Schraube mit einer Mutter ist.

Auf der Zeichnung ist zu erkennen, wie die Verbindung zweier ungleich dicker Rohre als Streben mit einer in der gewünschten Lage des schmaleren Rohrs 10 angeordneten ersten Aufnahme 12 versehenes dickere Rohr 14 und einer quer dazu angeordneten zweiten Aufnahme 18 für ein stiftartiges Querelement 16 versehen ist, wobei das schmalere Rohr 10 mit fünf parallelen Kerben 20 versehen ist, in die das in der zweiten Aufnahme 18 in dem dickeren Rohr 14 ruhende Querelement 16 je nach Einschubtiefe eingreift.

Dabei ist ein sich im wesentlichen in Richtung der Erstreckung des dickeren Rohrs 14 erstreckender Schlitz 22 an der ersten Aufnahme 12 vorgesehen und die erste Aufnahme 12 ist als Durchlaßbohrung ausgeführt.

Die Verbindung kann dauerhaft unter Nutzung eines durch zwei quer zur Erstreckung und quer zur ersten Aufnahme 12 vorgesehene Durchlaßbohrungen ragenden, mit einer Mutter 24 gesicherten Schraubbolzens 16 als Querelement in die erste Aufnahme 12 zusätzlich gegen Spiel festgeklemmt werden.

## Patentansprüche

1. Verbindung zur gesicherten Steckverbindung zweier ungleich dicker Streben, einer schmalen Strebe (10) und einer dickeren Strebe (14) in vorbestimmter geometrischer Stellung zueinander , **dadurch gekennzeichnet, daß**
eine mit einer in der gewünschten Steck-Verbindungs-Lage der schmaleren Strebe (10) angeordneten ersten Einschub -Aufnahme (12) versehene dickere Strebe (14) mit einer quer dazu angeordneten zweiten Aufnahme (18) für ein stiftartiges Querelement (16) versehen ist,
wobei die in vorbestimmter geometrischer Querstellung steck-verbundene schmalere Strebe (10) mit wenigstens einer Kerbe (20) versehen ist, in die das in der zweiten Aufnahme (18) in der dickeren Strebe (14) ruhende Querelement (16) eingreift.

2. Verbindung nach Anspruch 1, **dadurch gekennzeichnet, daß** die Streben (10, 14) Rohre sind.

3. Verbindung nach Anspruch 1 oder 2, **dadurch gekennzeichnet, daß** wenigstens ein sich im wesentlichen in Richtung der Erstreckung der dickeren Strebe (14) erstreckender Schlitz (22) an der ersten Aufnahme (12) vorgesehen ist.

4. Verbindung nach einem vorangehenden Ansprüche, **dadurch gekennzeichnet, daß** die erste Aufnahme (12) eine Durchlaßbohrung ist und eine Mehrzahl von Kerben (20) in der dünneren Strebe (10) vorgesehen ist.

5. Verbindung nach einem der vorangehenden Ansprüche, **dadurch gekennzeichnet, daß** die Aufnahme (18) durch zwei quer zur Erstreckung und quer zur ersten Aufnahme (12) vorgesehene Durchlaßbohrungen gebildet wird, in der ein mit einer Mutter (24) gesicherter Schraubbolzen (16) als Querelement in die erste Aufnahme (12) eingesetzt ist.

## Claims

1. Connection for the secured plug connection of two struts of unequal thickness, a narrow strut (10) and a thicker strut (14), in a predetermined geometrical position relative to each other, **characterised in that**
a thicker strut (14) that is provided with a first push-in receptacle (12) arranged in the desired plug-connection position of the narrower strut (10) is provided with a second receptacle (18), arranged transverse thereto, for a pin-type transverse element (16),
the narrower strut (10) plug-connected in the predetermined geometrical transverse position being provided with at least one notch (20) into which the transverse element (16) engages that rests in the second receptacle (18)in the thicker strut (14).

2. Connection according to Claim 1, **characterised in that** the struts (10, 14) are tubes.

3. Connection according to Claims 1 or 2, **characterised in that** at least one slot (22) extending essentially in the direction of the extent of the thicker strut (14) is provided on the first receptacle (12).

4. Connection according to one preceding claims, **characterised in that** the first receptacle (12) is a passage hole and a plurality of notches (20) are provided in the thinner strut 10.

5. Connection according to one of the preceding claims, **characterised in that** the receptacle (18) is formed by two passage holes provided transverse to the extent and transverse to the first receptacle 12, in which a screw bolt (16) as transverse element, secured with a screw nut (24), is inserted into the first receptacle (12).

## Revendications

1. Liaison pour l'assemblage bloqué par emboîtement de deux montants d'épaisseurs différentes, un montant plus mince (10) et un montant plus épais (14), dans des positions géométriques prédéfinies l'un par rapport à l'autre, **caractérisée en ce que**
un montant plus épais (14), pourvu d'un premier logement d'insertion (12) disposé dans la position souhaitée d'assemblage par emboîtement du montant plus mince (10), est pourvu d'un second logement (18), disposé transversalement au premier, pour un élément transversal (16) du genre goupille,
sachant que le montant plus mince (10), assemblé par emboîtement dans une position transversale géométrique prédéfinie, est pourvu d'au moins une encoche (20) dans laquelle s'engage l'élément transversal (16) reçu dans le second logement (18) du montant plus épais (14).

2. Liaison selon la revendication 1, **caractérisée en ce que** les montants (10, 14) sont des tubes.

3. Liaison selon la revendication 1 ou 2, **caractérisée en ce qu'**il est prévu sur le premier logement (12) au moins une fente (22) s'étendant essentiellement dans la direction de développement du montant plus épais (14).

4. Liaison selon l'une des revendications précédentes, **caractérisée en ce que** le premier logement (12) est un perçage traversant, et une pluralité d'encoches (20) sont prévues dans le montant plus mince (10).

5. Liaison selon l'une des revendications précédentes, **caractérisée en ce que** le logement (18) est formé par deux perçages traversants prévus transversalement au développement et transversalement au premier logement (12), par lesquels un boulon fileté (16) bloqué par un écrou (24) est inséré comme élément transversal dans le premier logement (12).
